Europäisches Patentamt

European Patent Office

Office européen des brevets

(11) Veröffentlichungsnummer: **0 315 198 B1**

(12) **EUROPÄISCHE PATENTSCHRIFT**

(45) Veröffentlichungstag der Patentschrift: **02.01.92**

(21) Anmeldenummer: **88118430.3**

(22) Anmeldetag: **04.11.88**

(51) Int. Cl.5: **F02D 41/36**, F02D 41/14, F02D 13/06, B60K 28/16

(54) **Regeleinrichtung zur Regelung des Antriebsdrehmomentes einer Brennkraftmaschine eines Kraftfahrzeugs.**

(30) Priorität: **06.11.87 DE 3737698**

(43) Veröffentlichungstag der Anmeldung:
**10.05.89 Patentblatt 89/19**

(45) Bekanntmachung des Hinweises auf die Patenterteilung:
**02.01.92 Patentblatt 92/01**

(84) Benannte Vertragsstaaten:
**DE FR GB IT SE**

(56) Entgegenhaltungen:
**EP-A- 0 294 634**
**DE-A- 3 224 254**

**PATENT ABSTRACTS OF JAPAN, Band 9, Nr. 333 (M-443)[2056], 27. Dezember 1985; & JP-A-60 163 755 (NIPPON DENSO K.K.) 26-08-1985**

(73) Patentinhaber: **Bayerische Motoren Werke Aktiengesellschaft**
**Patentabteilung AJ-30 Postfach 40 02 40 Petuelring 130**
**W-8000 München 40(DE)**

(72) Erfinder: **Dietrich, Christian**
**An der Grundbreite 19**
**W-8031 Wessling(DE)**
Erfinder: **Krusche, Heinz**
**Kreuzeckstrasse 8**
**W-8904 Friedberg(DE)**

**Beschreibung**

Die Erfindung betrifft eine Regeleinrichtung einer Brennkraftmaschine eines Kraftfahrzeuges mit einer Sauerstoffsonde im Abgaskanal nach dem Oberbegriff des Patentanspruchs 1.

Eine derartige Regeleinrichtung ist bereits aus der JP-A-60 163 755 bekannt. Bei der dort beschriebenen Regeleinrichtung wird das Antriebsdrehmoment einer Kraftfahrzeug-Brennkraftmaschine bei an den Antriebsrädern des Kraftfahrzeuges auftretendem Radschlupf dadurch reduziert, daß die der Brennkraftmaschine zuzuführende Kraftstoffmenge in Abhängigkeit von der Größe des erfaßten Radschlupfes, insbesondere durch Unterbinden der Kraftstoffzufuhr zu einzelnen Zylindereinheiten reduziert wird. Die sukzessive Reduzierung der Kraftstoffzufuhr zur Brennkraftmaschine wird solange fortgesetzt, bis der Radschlupf wieder abnimmt. Mit abnehmendem Radschlupf wird dann die der Brennkraftmaschine zuzuführende Kraftstoffmenge wieder sukzessive angehoben.

Mit dieser bekannten Regeleinrichtung ist zwar eine dynamisch sehr schnelle und wirkungsvolle Reduzierung des Antriebsdrehmomentes einer Kraftfahrzeug-Brennkraftmaschine möglich. Ihr Nachteil besteht jedoch darin, daß sie bei Brennkraftmaschinen mit Katalysator im Abgaskanal nicht eingesetzt werden kann. Dies ist darauf zurückzuführen, daß während der sukzessiven Reduzierung der der Brennkraftmaschine zuzuführenden Kraftstoffmenge der der Brennkraftmaschine zuzuführende Luftstrom nicht entsprechend der Verringerung der Kraftstoffmenge reduziert wird, da die durch das Fahrpedal betätigte Drosselklappe der Brennkraftmaschine geöffnet bleibt. Die Brennkraftmaschine saugt dann während des Regelvorganges, also für den Fall, daß die der Brennkraftmaschine zuzuführende Kraftstoffmenge reduziert ist, eine im Verhältnis zu der der Brennkraftmaschine zugeführten Kraftstoffmenge zu große Luftmenge an, die über den Abgaskanal wieder abgeführt werden muß. Durch diese überschüssige Luft im Abgaskanal der Brennkraftmaschine würde ein im Abgaskanal angeordneter Katalysator überlastet und damit geschädigt werden. Darüber hinaus wird durch die überschüssige Luft im Abgaskanal bei reduzierter Kraftstoffzufuhr zur Brennkraftmaschine, d. h. bei aktivierter Antriebsschlupfregelung, die Regelung der Kraftstoffzufuhr in Abhängigkeit des Ausgangssignals der Sauerstoffsonde erheblich gestört. Um dies zu verhindern, wird beim Gegenstand der JP-A-60 163 755 die Regelung der Kraftstoffzufuhr in Abhängigkeit des Ausgangssignals der Sauerstoffsonde bei aktivierter Antriebsschlupfregelung unterbunden.

Ein weiterer Nachteil der bekannten Regeleinrichtung besteht darin, daß durch das Abschalten zumindest einzelner Zylindereinheiten der Brennkraftmaschine die Gleichförmigkeit des Brennkraftmaschinenlaufs erheblich beeinträchtigt wird. Dies macht sich im Kraftfahrzeug insbesondere durch Ruckel- bzw. Schüttelbewegungen bemerkbar und beeinträchtigt dadurch den Fahrkomfort des Kraftfahrzeuges.

Ferner ist aus der DE-A-32 24 254 eine Regeleinrichtung einer Brennkraftmaschine eines Kraftfahrzeuges bekannt, die mit der aus der JP-A-60 163 755 bekannten Regeleinrichtung weitgehend übereinstimmt. Der einzige Unterschied besteht lediglich darin, daß bei der aus der DE-A-32 24 254 bekannten Regeleinrichtung keine Sauerstoffsonde im Abgaskanal der Brennkraftmaschine vorgesehen ist.

Es ist daher Aufgabe der Erfindung, eine Regeleinrichtung eingangs genannter Art anzugeben, die auch bei Brennkraftmaschinen mit Katalysator im Abgaskanal einsetzbar ist und durch die darüber hinaus eine deutliche Verbesserung der Gleichförmigkeit des Brennkraftmaschinenlaufs während des Regeleinsatzes erreicht wird.

Diese Aufgabe wird erfindungsgemäß durch die kennzeichnenden Merkmale des Patentanspruchs 1 gelöst.

Bei der erfindungsgemäßen Regeleinrichtung erfolgt die Regelung des Antriebsdrehmomentes einer Kraftfahrzeug-Brennkraftmaschine in zwei Schritten. Im ersten Regelschritt wird bei auftretendem Radschlupf zur dynamisch schnellen Reduzierung des Antriebsdrehmomentes der Brennkraftmaschine die Kraftstoffzufuhr und/oder die Zündspannung für einzelne Zylindereinheiten in Abhängigkeit von der Größe des erfaßten Radschlupfes abgeschaltet. Im zweiten Regelschritt wird insbesondere zur Verringerung des durch den ersten Regelschritt bedingten zu großen Luftanteils im Abgas der Brennkraftmaschine der der Brennkraftmaschine zuzuführende Luftstrom in Abhängigkeit von der Größe des Radschlupfes und der Größe des Sauerstoffsondenausgangssignals oder eines gleichwertigen, für die Abgaszusammensetzung repräsentativen Signals der Brennkraftmaschinenregeleinrichtung, beispielsweise des Abschaltgrades der Brennkraftmaschinen-Kraftstoffzufuhr verringert. Durch den Abbau des überschüssigen Luftanteils im Abgas der Brennkraftmaschine im zweiten Regelschritt wird eine Überlastung und damit Schädigung des im Abgaskanal der Brennkraftmaschine angeordneten Katalysators verhindert. Durch die Verringerung des der Brennkraftmaschine zuzuführenden Luftstromes wird neben der Wiederherstellung der gewünschten Abgaszusammensetzung auch eine zusätzliche, dynamisch langsamere Verringerung des Antriebsdrehmomentes erreicht. Diese zusätzliche Antriebsdrehmomentreduzierung kann dann durch Zuschalten einzelner Zylindereinheiten wieder kompensiert werden. Letzteres ist erwünscht, da dadurch die Gleichförmigkeit des Brennkraftmaschinenlaufs insgesamt deutlich verbessert werden kann. Ebenso, wie die Verringerung des Antriebsdrehmomentes der Brennkraftmaschine in zwei Regelschritten erfolgt, erfolgt auch die sukzessive Anhebung des Antriebsdrehmomentes bei abnehmendem Radschlupf wieder in zwei Regelschritten.

Nach einer Weiterbildung der Erfindung ist zur Verringerung des der Brennkraftmaschine zuzuführenden Luftstromes eine in Abhängigkeit von der Fahrpedalstellung, der Größe des Radschlupfes und der Größe des Sauerstoffsondenausgangssignals oder eines gleichwertigen, für die Abgaszusammensetzung repräsentativen Signals der Brennkraftmaschinenregeleinrichtung geregelte, über ein Stellglied betätigte Drosselklappe im Ansaugkanal der Brennkraftmaschine vorgesehen. Da die dynamisch schnelle Reduzierung des Antriebsdrehmomentes einer mit der erfindungsgemäßen Regeleinrichtung ausgerüsteten Brennkraftmaschine durch stufen- und/oder zeitweises Abschalten der Kraftstoffzufuhr und/oder der Zündspannung für einzelne Zylindereinheiten erfolgt, kann die Regelung der Drosselklappe relativ langsam erfolgen. Zur Regelung der Drosselklappe ist daher nur eine technisch einfache und daher preisgünstige Regeleinrichtung erforderlich.

Bei einer anderen Weiterbildung der Erfindung ist zusätzlich zu einer mechanisch mit dem Fahrpedal des Kraftfahrzeuges gekoppelte Drosselklappe eine zweite, in Abhängigkeit von der Größe des Radschlupfes und der Größe des Sauerstoffsondenausgangssignals oder eines gleichwertigen, für die Abgaszusammensetzung repräsentativen Signals der Brennkraftmaschinenregeleinrichtung geregelte, über ein Stellglied betätigte Drosselklappe im Ansaugkanal der Brennkraftmaschine vorgesehen. Diese Weiterbildung der Erfindung zeichnet sich gegenüber der Verwendung nur einer einzigen geregelten Drosselklappe vor allem durch ihre größere Sicherheit aus, da die für die Leistungssteuerung der Brennkraftmaschine primär vorgesehene Drosselklappe nach wie vor mechanisch betätigt wird.

Im folgenden soll die Erfindung anhand zweier Ausführungsbeispiele der Erfindung näher erläutert werden. Es zeigen:

Fig. 1     ein Blockschaltbild einer ersten Ausführung der erfindungsgemäßen Regeleinrichtung und

Fig. 2     ein Blockschaltbild einer zweiten Ausführungsform der erfindungsgemäßen Regeleinrichtung.

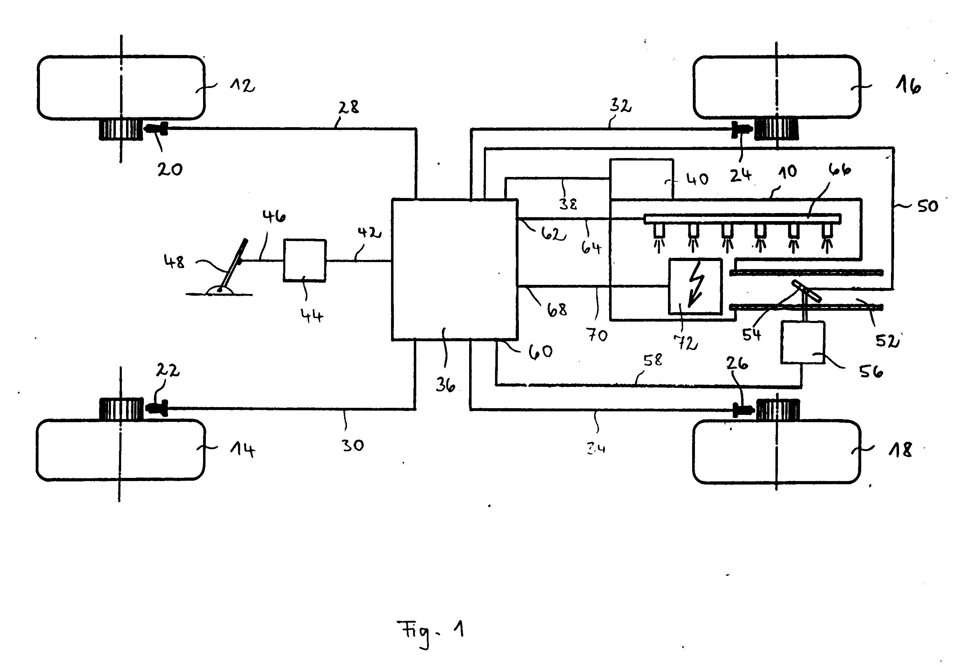

Bei der in Fig. 1 dargestellten Regeleinrichtung zur Regelung des Antriebsdrehmomentes einer Brennkraftmaschine 10 werden die Winkelgeschwindigkeiten bzw. Raddrehzahlen der einzelnen Räder 12, 14, 16 und 18 eines Kraftfahrzeuges durch die einzelnen Radsensoren 20, 22, 24 und 26 erfaßt. Die Ausgangssignale dieser Radsensoren werden über Zuleitungen 28, 30, 32 und 34 einer elektronischen Regelschaltung 36 zugeführt. Durch Vergleich der Winkelgeschwindigkeiten bzw. Drehzahlen der angetriebenen Räder, beispielsweise 12 und 14, mit den Winkelgeschwindigkeiten bzw. Drehzahlen der nichtangetriebenen Räder, beispielsweise 16 und 18, wird in der elektronischen Regelschaltung 36 die Größe eines auftretenden Radschlupfes festgestellt.

Als weitere Eingangsgrößen erhält die elektronische Regelschaltung 36 ferner über eine Zuleitung 38 das Ausgangssignal einer im Abgaskanal der Brennkraftmaschine 10 angeordneten Sauerstoffsonde 40, über eine Zuleitung 42 das Ausgangssignal eines Fahrpedal-Stellungsgebers 44, der über eine mechanische Verbindung 46 mit dem Fahrpedal 48 des Kraftfahrzeuges verbunden ist, und über eine Zuleitung 50 das Ausgangssignal eines in der Figur nicht sichtbaren Drosselklappenstellungsgebers, der mit der im Ansaugkanal 52 der Brennkraftmaschine angeordneten Drosselklappe 54 drehfest verbunden ist. Die Drosselklappe 54 wird von einem Stellglied 56 betätigt, das über eine Zuleitung 58 mit einem ersten Ausgang 60 der elektronischen Regelschaltung 36 verbunden ist. Während ein zweiter Ausgang 62 dieser elektronischen Regelschaltung 36 über eine Zuleitung 64 mit der Kraftstoffzumeßeinrichtung 66 der Brennkraftmaschine 10 verbunden ist, ist ihr dritter Ausgang 68 über eine Zuleitung 70 an die Zündspannungsversorgungseinrichtung 72 der Brennkraftmaschine 10 angeschlossen.

Nachdem vorstehend der Aufbau der in Fig. 1 als Blockschaltbild dargestellten Regeleinrichtung beschrieben wurde, soll im folgenden die Funktionsweise dieser Regeleinrichtung näher erläutert werden.

Bei der in Fig. 1 dargestellten Regeleinrichtung wird in der elektronischen Regelschaltung 36 ein an den Antriebsrädern 12 und 14 auftretender Radschlupf der Größe nach dadurch ermittelt, daß die von den Radsensoren 20 und 22 erfaßten Winkelgeschwindigkeiten bzw. Raddrehzahlen der angetriebenen Räder 12 und 14 mit den von den Radsensoren 24 und 26 erfaßten Winkelgeschwindigkeiten bzw. Raddrehzahlen der nichtangetriebenen Räder 16 und 18 verglichen werden. In Abhängigkeit von der Größe des ermittelten Radschlupfes schaltet die elektronische Regelschaltung 36 durch entsprechende Einwirkung auf die Kraftstoffzumeßeinrichtung 66 bzw. die Zündspannungsversorgungseinrichtung 72 der Brennkraftmaschine 10 stufen- und/oder zeitweise die Kraftstoffzufuhr und/oder die Zündspannung für einzelne Zylindereinheiten sukzessive solange ab, bis der ermittelte Radschlupf wieder abnimmt. Gleichzeitig bzw. unmittelbar nach Abschalten der Kraftstoffzufuhr und/oder der Zündspannung für einzelne Zylindereinheiten der Brennkraftmaschine 10 wird in einem zweiten Regelschritt der der Brennkraftmaschine 10 über deren Ansaugkanal 52 zuzuführende Luftstrom in Abhängigkeit von der Größe des ermittelten Radschlupfes und der Größe des Ausgangssignales der Sauerstoffsonde 40 verringert. Diese Verringerung des der Brennkraftmaschine 10 zuzuführenden Luftstromes wird von der elektronischen Regelschaltung 36 durch eine entsprechende Ansteuerung des mit der Drosselklappe 54 mechanisch verbundenen Drosselklappenstellgliedes 56 erreicht. Durch diese Drosselklappenregelung in Abhängigkeit von der Größe des Radschlupfes und insbesondere von der Größe des Ausgangssignals der Sauerstoffsonde 40 soll in erster Linie der bei der Abschaltung einzelner Zylindereinheiten der Brennkraftmaschine 10 auftretende, den Katalysator der Brennkraftmaschine schädigende Luftüberschuß im Abgaskanal beseitigt werden. Dieser zweite Regelschritt ist also erforderlich, damit die beschriebene Regeleinrichtung auch bei Kraftfahrzeug-Brennkraftmaschinen mit Katalysator im Abgaskanal einsetzbar ist. Durch diesen zweiten Regelschritt wird neben der für einen Katalysator unschädlichen Abgaszusammensetzung auch eine Verbesserung der Gleichförmigkeit des Brennkraftmaschinenlaufs während eines Regelvorganges erreicht. Dies ist darauf zurückzuführen, daß die durch die Reduzierung des der Brennkraftmaschine 10 zuzuführenden Luftstromes bedingte zusätzliche Antriebsdrehmomentverringerung bei insgesamt gleichbleibender Größe des wirksamen Antriebsdrehmoments zur Kompensation eine Zuschaltung einzelner Zylindereinheiten erlaubt, wodurch der Gleichlauf der Brennkraftmaschine 10 deutlich verbessert wird.

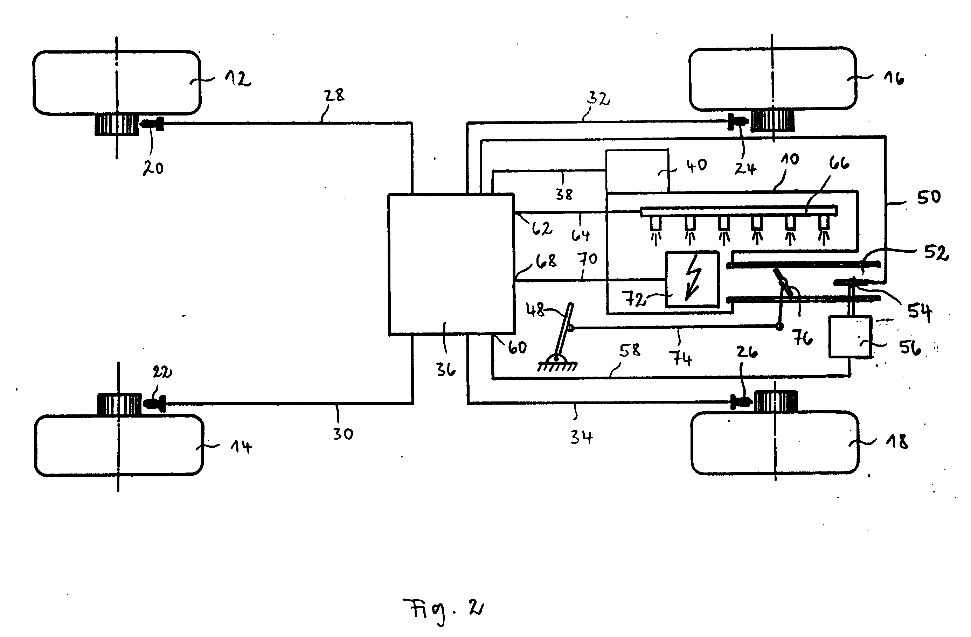

Die in Fig. 2 als Blockschaltbild dargestellte Regeleinrichtung entspricht weitgehend der Regeleinrichtung von Fig. 1. Es sind deshalb bei der Regeleinrichtung von Fig. 2 gleiche Teile mit gleichen Bezugzeichen wie in Fig. 1 versehen. Die Regeleinrichtung von Fig. 2 unterscheidet sich von der von Fig. 1 lediglich dadurch, daß neben der geregelten, vom Drosselklappenstellglied 56 betätigten Drosselklappe 54 eine weitere, mechanisch über ein Betätigungsgestänge 74 mit dem Fahrpedal 48 des Kraftfahrzeuges gekoppelte Drosselklappe 76 vorgesehen ist. Da für die Leistungssteuerung der Brennkraftmaschine 10 in Abhängigkeit von der Stellung des Fahrpedals 48 die mit diesem mechanisch gekoppelte separate Drosselklappe 76 vorgesehen ist, wird bei der Regeleinrichtung von Fig. 2 der bei der Regeleinrichtung von Fig. 1 erforderliche Fahrpedalstellungsgeber 44 zur Übermittlung der Fahrpedalstellung und damit des Leistungswunsches an die elektronische Regelschaltung 36 nicht benötigt. Im übrigen stimmen Aufbau und Funktion der Regelschaltung von Fig. 2 mit der von Fig. 1 vollständig überein, so daß die entsprechende Beschreibung zur Fig. 1 auch für die Regeleinrichtung von Fig. 2 gilt.

**Patentansprüche**

1. Regeleinrichtung einer Brennkraftmaschine (10) eines Kraftfahrzeuges mit einer Sauerstoffsonde (40) im Abgaskanal, mit ersten Mitteln zur Regelung des Antriebsdrehmomentes der Brennkraftmaschine, mit zweiten Mitteln, die den an den Antriebsrädern des Kraftfahrzeuges auftretenden Radschlupf der Größe nach erfassen und mit dritten Mitteln, die in Abhängigkeit von der Größe des Radschlupfes stufen-und/oder zeitweise die Kraftstoffzufuhr und/oder die Zündspannung für einzelne Zylindereinheiten abschalten,
dadurch gekennzeichnet, daß die dritten Mittel zur Regelung des Antriebsdrehmomentes einer Brennkraftmaschine (10) mit Katalysator im Abgaskanal gleichzeitig bzw. unmittelbar nach Abschalten der Kraftstoffzufuhr und/oder der Zündspannung für einzelne Zylindereinheiten den der Brennkraftmaschine (10) zuzuführenden Luftstrom in Abhängigkeit von der Größe des Radschlupfes und der Größe des Sauerstoffsondenausgangssignals oder eines gleichwertigen, für die Abgaszusammensetzung repräsentativen Signals verringern.

2. Regeleinrichtung nach Anspruch 1,
dadurch gekennzeichnet, daß eine in Abhängigkeit von der Fahrpedalstellung, der Größe des Radschlupfes und der Größe des Sauerstoffsondenausgangssignals oder eines gleichwertigen, für die Abgaszusammensetzung repräsentativen Signals der Brennkraftmaschinenregeleinrichtung (36) geregelte, über ein Stellglied (56) betätigte Drosselklappe (54) im Ansaugkanal (52) der Brennkraftmaschine (10) vorgesehen ist.

3. Regeleinrichtung nach Anspruch 1,
dadurch gekennzeichnet, daß zusätzlich zu einer mechanisch mit dem Fahrpedal (48) des Kraftfahrzeuges gekoppelten Drosselklappe (76) eine zweite, in Abhängigkeit von der Größe des Radschlupfes und der Größe des Sauerstoffsondenausgangssignals oder eines gleichwertigen, für die Abgaszusammensetzung repräsentativen Signals der Brennkraftmaschinenregeleinrichtung (36) geregelte, über ein Stellglied (56) betätigte Drosselklappe (54) im Ansaugkanal (52) der Brennkraftmaschine (10) vorgesehen ist.

## Claims

1. A regulator of an internal-combustion engine (10) of a motor vehicle with an oxygen probe (40) in the exhaust duct, with first means to regulate the driving torque of the internal-combustion engine, with second means which pick up the wheel slip occurring on the drive wheels of the motor vehicle with regard to the extent thereof, and with third means which as a function of the extent of the wheel slip gradually and/or intermittently disconnect the fuel supply and/or the ignition voltage for individual cylinder units,
characterised in that the third means for regulating the driving torque of an internal-combustion engine (10) with a catalyst in the exhaust duct simultaneously with , or respectively immediately after, the disconnecting of the fuel supply and/or of the ignition voltage for individual cylinder units reduce the flow of air which is to be supplied to the internal-combustion engine (10) as a function of the extent of the wheel slip and of the value of the oxygen probe output signal or of an equivalent signal which is representative of the exhaust gas composition.

2. A regulator according to Claim 1,
characterised in that a throttle valve (54) is provided in the intake duct (52) of the internal-combustion engine (10), which throttle valve is regulated as a function of the drive pedal setting, the extent of the wheel slip and the value of the oxygen probe output signal or of an equivalent signal of the internal-combustion engine regulator (36) which is representative of the exhaust gas composition, and which throttle valve is actuated via an adjustment element (56).

3. A regulator according to Claim 1,
characterised in that, in addition to a throttle valve (76) which is coupled mechanically with the drive pedal (48) of the motor vehicle, a second throttle valve (54) is provided in the intake duct (52) of the internal-combustion engine (10), which second throttle valve is regulated as a function of the extent of the wheel slip and of the value of the oxygen probe output signal or of an equivalent signal of the internal-combustion engine regulator (36) which is representative of the exhaust gas composition, and which throttle valve is actuated via an adjustment element (56).

## Revendications

1. Dispositif de réglage d'un moteur à combustion interne (10) d'un véhicule avec une sonde à oxygène (40) dans le tube d'échappement, comportant des premiers moyens pour régler le couple d'entraînement du moteur, des seconds moyens, qui détectent le patinage se produisant sur les roues entraînées du véhicule selon son importance, et des troisièmes moyens, qui, en fonction de l'importance du patinage débranchent par étapes et/ou provisoirement l'alimentation en carburant, et/ou la tension d'allumage pour les éléments de cylindre séparés, caractérisé en ce que les troisièmes moyens pour le réglage d'un couple d'entraînement d'un moteur (10) avec du catalyseur dans le tube d'échappement, réduisent en même temps ou directement après l'arrêt de l'alimentation en carburant et/ou le débranchement de la tension d'allumage pour les éléments de cylindre séparés, le flux d'air alimentant le moteur (10) en fonction de l'importance du patinage et de la grandeur du signal émis par la sonde à oxygène ou d'un signal équivalent, représentatif de la composition du gaz d'échappement.

2. Dispositif de réglage selon la revendication 1, caractérisé en ce qu'il a été prévu dans le conduit d'aspiration (52) du moteur (10) un clapet d'étranglement (54), commandé par un organe de réglage (56) et réglé en fonction de la position de la pédale d'accélérateur (48) de l'importance du patinage des roues et de la grandeur du signal émis par la sonde à oxygène ou d'un signal équivalent de l'élément de réglage du moteur (36) représentatif de la composition du gaz d'échappement.

3. Dispositif de réglage selon la revendication 1, caractérisé en ce qu'en plus du papillon (76) couplé mécaniquement avec la pédale d'accélérateur (48) du véhicule, il a été prévu dans le conduit d'aspiration (52) du moteur (10) un deuxième clapet d'étranglement (54), commandé par un organe de réglage (56), réglé en fonction de l'importance du patinage et de la grandeur du signal émis par la sonde à oxygène ou d'un signal équivalent de l'élément de réglage du moteur (36), représentatif de la composition du gaz d'échappement.

Fig. 1

Fig. 2